# EUROPÄISCHE PATENTSCHRIFT

(11) **EP 1 271 110 B1**
(45) Veröffentlichungstag und Bekanntmachung des Hinweises auf die Patenterteilung: **07.05.2008**
(21) Anmeldenummer: 02012581.1
(22) Anmeldetag: 06.06.2002
(51) Int. Cl.: G01F 1/06, G01F 15/14

(54) **Wassermessgerät mit Kunststoffgehäuse**
Water meter with plastic housing
Compteur d'eau pourvu d'un boîtier en plastique

(30) Priorität: 22.06.2001 DE 20110370 U
(43) Veröffentlichungstag der Anmeldung: 02.01.2003
(73) Patentinhaber: E. Wehrle GmbH, D-78120 Furtwangen (DE)
(72) Erfinder: Pühler, Thomas, 78048 Villingen-Schwenningen (DE)
(74) Vertreter: Neymeyer, Franz

(56) Entgegenhaltungen:
- EP-A1- 0 045 588
- EP-A2- 0 520 306

## Beschreibung

Die Erfindung betrifft eine Meßeinheit mit Kunststoffgehäuse für ein Wassermeßgerät, bei dem das Kunststoffgehäuse einen unteren, im wesentlichen zylindrischen Meßbecher aufweist, in dem ein Flügelrad koaxial drehbar gelagert ist und in dessen zylindrischer Wand wenigstens zwei sich diametral gegenüberliegende Einströmkanäle mit achsparallelen Leitflächen angeordnet sind, deren Strömungsrichtung auf die Flügel des rotierenden Flügelrades gerichtet ist, wobei der Meßbecher einen planebenen Becherboden aufweist, der auf seiner Innenseite mit mehreren radialen Staurippen versehen ist, und mit axial oberhalb der Einströmkanäle angeordneten Auslaßkanälen mit achsparallelen Leitflächen, die zu den Einströmkanälen jeweils entgegengesetzt schräg verlaufen, sowie mit einem axial oberhalb der Auslaßkanäle liegenden Zählwerkteil zur Aufnahme eines vom Flügelrad angetriebenen Zählwerks, das eine den Gehäusedeckel bildende, obere Abschlußplatine und eine mit dieser verbundene, untere Lagerplatine aufweist.

Bei den bekannten Meßeinheiten der gattungsgemäßen Art, zum Beispiel EP 0 045 588, bestehen die Kunststoffgehäuse jeweils aus zwei Teilen, nämlich aus einem sog. Werkbecher, in dem ein Zählwerk untergebracht ist und aus einem sog. Flügelradbecher, in dem sich das Flügelrad befindet und in dessen zylindrischen Wänden die Einströmkanäle und die Auslaßkanäle angeordnet sind.

Im zusammengesetzten Gebrauchszustand des zweiteiligen Gehäuses bildet der Boden des sog. Werkbechers zugleich den Deckel des Flügelradbechers. Dieser Deckel ist auf der dem Flügelrad zugekehrten Seite mit einer Vielzahl von radial verlaufenden Staurippen versehen. Solche Staurippen weist auch die Innenseite des Bodens des Flügelradbechers auf. Diese Staurippen dienen dazu, einen meßtechnisch günstigen Verlauf der Meßkurve zu erreichen, d.h. sie dienen zur Verminderung von Meßfehlern, in dem sie eine turbulente Strömung erzeugen, durch welche die Meßkurve begradigt wird.

Man erreicht dadurch eine Proportionalität zwischen dem Volumenstrom und der Flügelraddrehzahl, die durch die Flügelradwelle und ein darauf angebrachtes Zahnritzel auf das Meßwerk übertragen und von diesem zur Anzeige gebracht wird.

Die zweiteilige Gestaltung des Kunststoffgehäuses der Meßeinheit ist sowohl spritzgußtechnisch als auch montagetechnisch sehr aufwendig und somit kostenintensiv.

Der Erfindung liegt die Aufgabe zugrunde, ein Wassermeßgerät der eingangs genannten Art zu schaffen, das unter Einhaltung der vorgeschriebenen Meßgenauigkeit einen einfacheren Gehäuseaufbau aufweist und einfacher, insbesondere kostengünstiger, herstellbar ist

Gelöst wird diese Aufgabe erfindungsgemäß dadurch, daß das Kunststoffgehäuse einstückig ohne Zwischenwand zwischen dem Meßbecher und dem Zählwerkteil ausgebildet ist, und daß die Flügel des Flügelrades unterseitig von der Radialebene der unteren Randkanten der Einströmkanäle einen axialen Abstand von weniger als 4 mm aufweisen und oberseitig in der Radialebene der unteren Begrenzungsflächen der Auslaßkanäle enden oder diese Radialebene nach oben höchstens um ein Maß überschreiten, das einem Viertel bis einem Drittel der axialen Höhe einer Auslaßöffnung eines Auslaßkanals entspricht.

Durch die erfindungsgemäße, einteilige Gestaltung des Kunststoffgehäuses entfällt nicht nur die separate Herstellung zweier Gehäuseteile, die in einem besonderen Montagevorgang zusammengesetzt und miteinander verbunden werden müssen, sondern es lassen sich auch die Einzelteile einfacher im Kunststoffgehäuse funktionsgerecht montieren bzw. lagern und einsetzen. Durch die erfindungsgemäße Gestaltung ist es auch gelungen, den Wegfall der normalerweise auch an der Oberseite des Flügelrades vorhandenen Staurippen, die bei den bekannten zweiteiligen Kunststoffgehäusen für ein korrektes Meßergebnis so maßgebend sind, zu kompensieren.

Dabei trägt die Ausgestaltung nach Anspruch 2 wesentlich zur Stabilisierung der Meßgenauigkeit in einem weiten Durchflußmengenbereich bei.

Während die Ausgestaltung nach Anspruch 3 zur weiteren Verbesserung der Meßgenauigkeit beiträgt, sind die Ausgestaltungen nach den Ansprüchen 4 und 5 besonders dazu geeignet, bei kleinen Volumenströmen ein zu frühes Abfallen der Meßkurve, also zu große negative Meßfehler, zu vermeiden, wobei sich gezeigt hat, daß auch die Ausgestaltungen nach den Ansprüchen 6 bis 8 diesem Zweck dienlich sind.

Weitere vorteilhafte Ausgestaltungen der Erfindung sind Gegenstand der Ansprüche 9 bis 18.

Anhand der Zeichnung wird im folgenden ein Ausführungsbeispiel der Erfindung näher erläutert. Es zeigt:
- Fig. 1: eine komplette Meßeinheit mit Kunststoffgehäuse im Schnitt gemäß der Schnittlinie I-I aus Fig. 2;
- Fig. 2: eine Draufsicht II aus Fig. 1;
- Fig. 3: einen Schnitt III-III aus Fig. 1;
- Fig. 4: das Kunststoffgehäuse der Meßeinheit in Seitenansicht;
- Fig. 5: einen Schnitt V-V aus Fig. 4;
- Fig. 5a: einen Ausschnitt Va aus Fig. 5;
- Fig. 6: einen Schnitt VI-VI aus Fig. 4;
- Fig. 6a: einen Schnitt VIa-VIa aus Fig. 6;
- Fig. 6b: einen vergrößerten Teilausschnitt VIb aus Fig. 6;
- Fig. 7: einen Teilschnitt VII-VII aus Fig. 5;
- Fig. 8: einen Teilschnitt VIII-VIII aus Fig. 5;
- Fig. 9: einen Schnitt IX-IX aus Fig. 4 in leicht vergrößerter Darstellung;
- Fig. 10: einen Schnitt X-X aus Fig. 9;
- Fig. 11: einen Schnitt XI-XI aus Fig. 9;
- Fig. 12: einen Teilschnitt XII-XII aus Fig. 11;
- Fig. 13: die schematische Darstellung zweier axial übereinander liegender Einström- und Auslaßkanäle aus den Fig. 10 und 11.

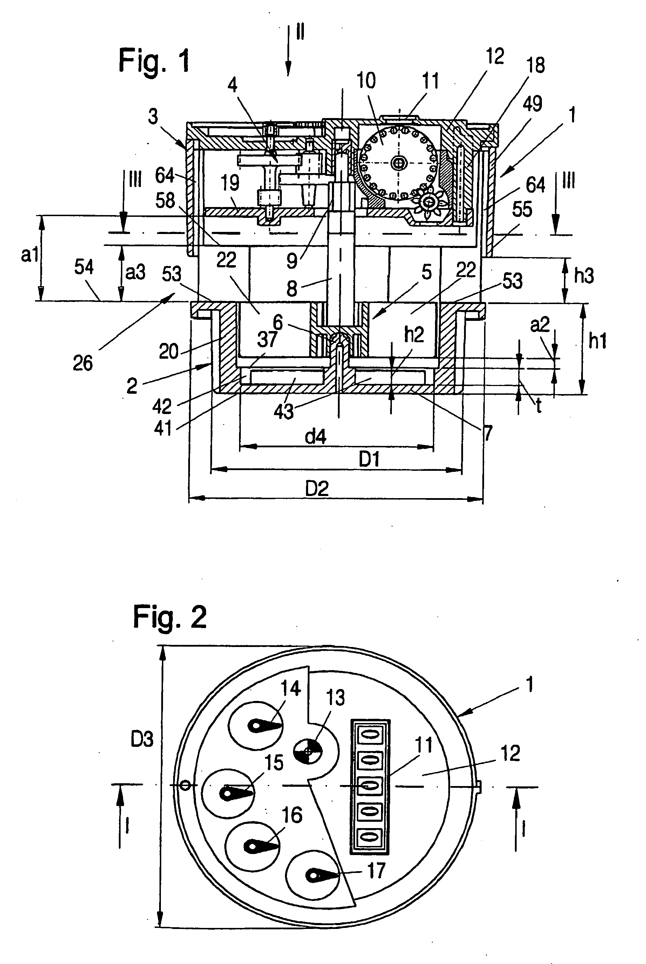

Die in den Fig. 1 und 2 in natürlicher Größe dargestellte Meßeinheit für ein Wassermeßgerät weist ein als einstükkiges Spritzgußteil hergestelltes Kunststoffgehäuse 1 auf. Dieses Kunststoffgehäuse 1 besteht aus einem unteren, im wesentlichen zylindrischen Meßbecher 2 sowie aus einem oberen Zählwerkteil 3, in den ein Zählwerk 4 eingesetzt ist.

Im Meßbecher 2 ist ein Flügelrad 5 auf einem zentralen Lagerzapfen 6 des Becherbodens 7 koaxial und drehbar gelagert, dessen Welle 8 über ein Zahnritzel 9 mit dem Räderwerk des Zählwerks 4 getrieblich in Eingriff steht.

Das Zählwerk 4 weist ein Rollenzählwerk 10 auf, dessen Zahlenrollen durch ein Fenster 11 in der oberen Abschlußplatine 12 ablesbar sind. Außerdem besitzt dieses Zählwerk 4 auf der Oberseite der Abschlußplatine 12 eine drehend angetriebene Kontrollscheibe 13 sowie vier analog anzeigende Drehzeiger 14, 15, 16 und 17, die zusätzlich zu dem Kubikmeter anzeigenden Rollenzählwerk 10 jeweils Liter in der Einer-, Zehner-, Hunderter- und Tausender-Dekade anzeigen.

Wie aus Fig. 1 ersichtlich ist, bildet die obere Abschlußplatine 12 des Zählwerks 4 den Gehäusedeckel des Kunststoffgehäuses 1. Die aus Kunststoff bestehende Abschlußplatine 12 ist durch mehrere einstückig angespritzte Distanzsäulen 18 formschlüssig mit einer unteren ebenfalls aus Kunststoff bestehenden Lagerplatine 19 des Zählwerks 4 verbunden. Zwischen diesen beiden Platinen 12 und 19 ist das Räderwerk des Zählwerks 4 und auch das Rollenzählwerk 10 angeordnet.

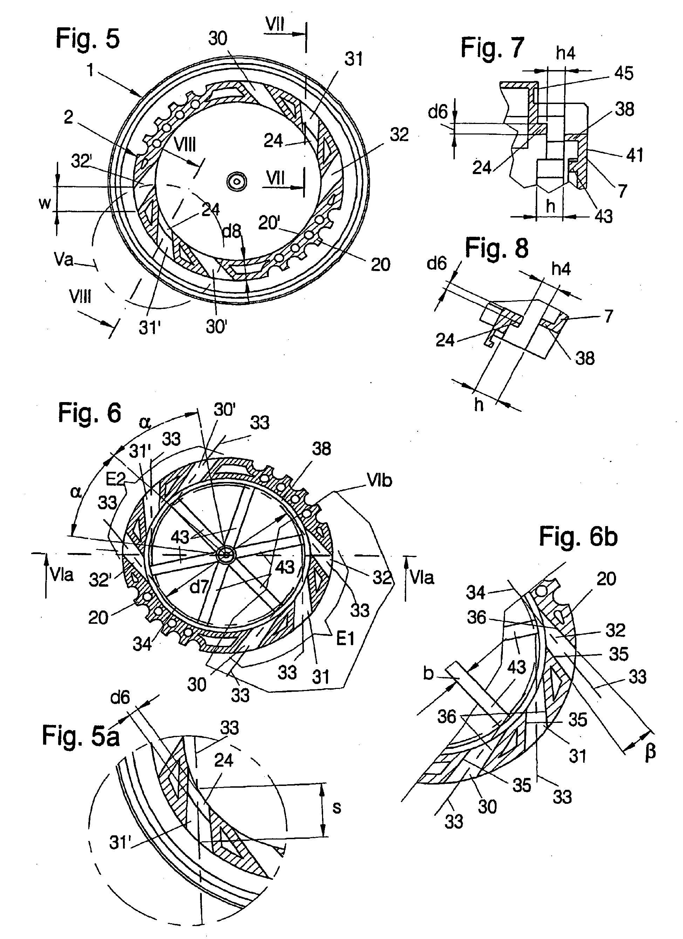

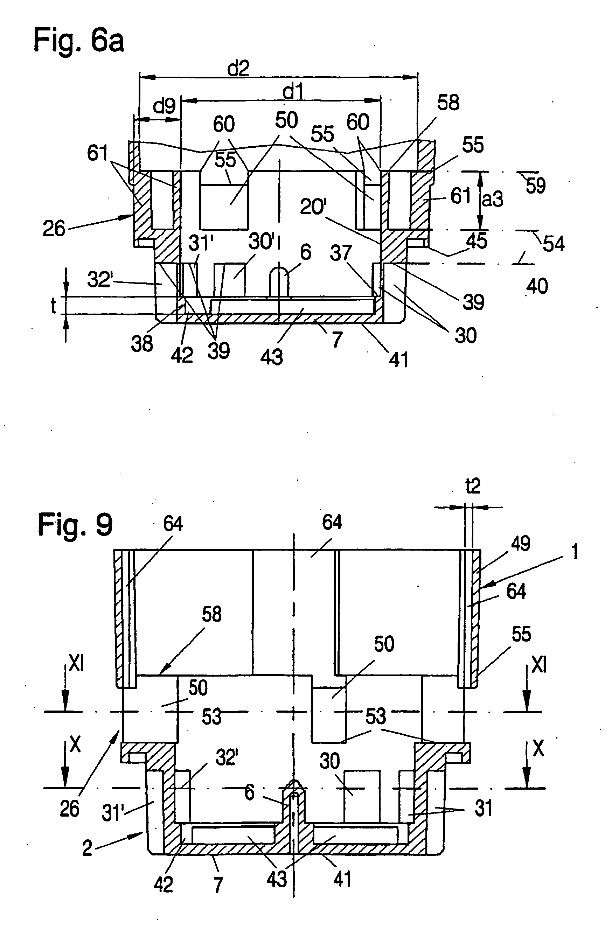

In dem zylindrischen, etwa 6 mm bis 7 mm dicken unteren Teil 20 der Becherwand, die einen Außendurchmesser **D1** von etwa 56 mm und eine Höhe **h1** von etwa 20 mm aufweist, sind zwei sich diametral gegenüberliegende Gruppen E1 und E2 von jeweils drei Einströmkanälen 30, 31 und 32 bzw. 30', 31' und 32' angeordnet. Die Einströmkanäle 30, 31 und 32 der Gruppe E1 haben ebenso wie die Einströmkanäle 30', 31' und 32' der Gruppe E2 jeweils einen Winkelabstand α von 36° voneinander (siehe Fig. 6).

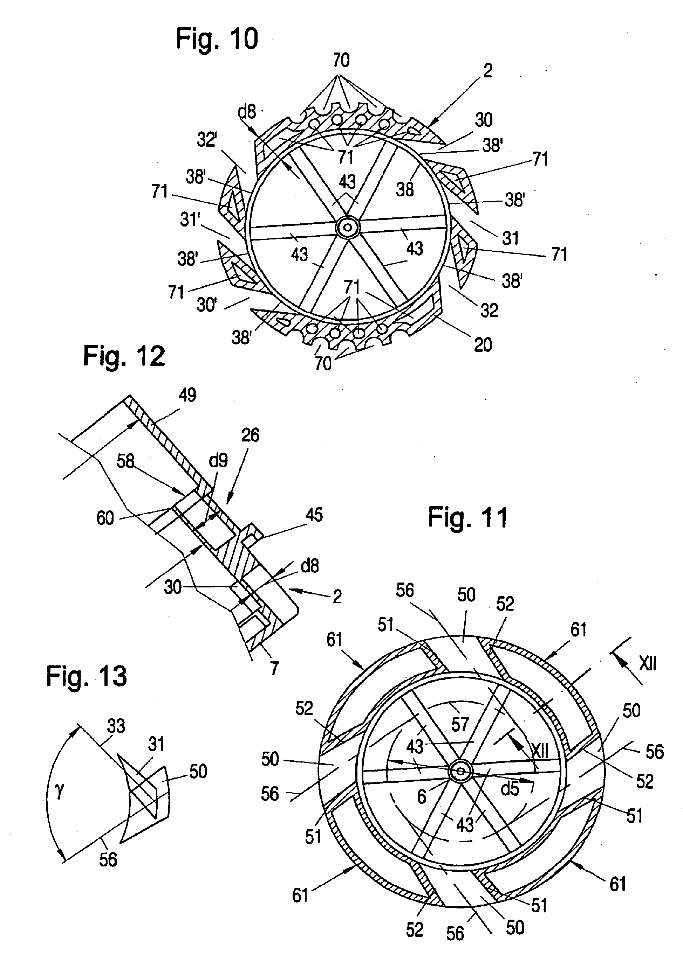

Diese Einströmkanäle 30, 31, 32 bzw. 30', 31' und 32' weisen jeweils zwei achsparallele Leitflächen 35 und 36 auf (Fig. 6b und 10), die in Strömungsrichtung konvergierend miteinander einen spitzen Keilwinkel β von etwa 6° bis 7° bilden und am Außenumfang des Meßbechers 2 in Umfangsrichtung eine Weite **w** von etwa 6 mm bis 7 mm aufweisen (Fig. 5). Die axialen Begrenzungen der Einlaßkanäle 30 bis 32' werden unterseitig von unteren Randkanten 37 gebildet, die jeweils Ringabschnitte des oberen Randes einer inneren Ringwand 38 des Becherbodens 7 sind. Oberseitig sind die Einlaßkanäle 30 bis 32' durch radiale Begrenzungsflächen 39 begrenzt, die in einer gemeinsamen Radialebene 40 liegen, deren axialer Abstand von der Randkante 37 der Ringwand 38 einer normalen Höhe **h** der Einlaßkanäle 30 bis 32' von etwa 7 mm bis 8 mm entspricht.

Außerhalb der Ringwand 38 verlaufen die Leitflächen 35 und 36 der Einströmkanäle 30 bis 32' bis zur Unterseite 41 des Becherbodens 7, was bedeutet, daß die Einströmkanäle außerhalb der Ringwand 38 des Becherbodens 7 unterseitig offen sind.

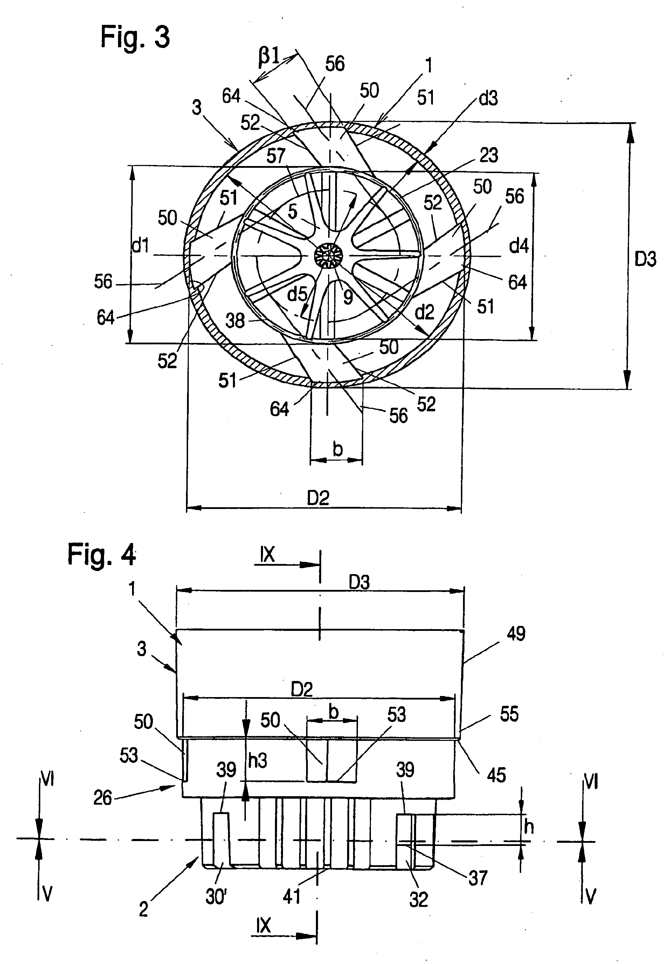

Die Einströmkanäle 30 bis 32' sind so gestaltet und angeordnet, daß ihre achsparallelen Strömungsmittelebenen 33, die jeweils mit den Winkelhalbierenden der Keilwinkel β zusammenfallen, jeweils tangential zu einem gemeinsamen konzentrischen Kreis 34 verlaufen, dessen Durchmesser **d7** etwas kleiner ist als der Innendurchmesser **d4** der Ringwand 38. Wie aus Fig. 3 ersichtlich ist, liegen die radialen Enden der Flügel 22 des Flügelrades 5 auf einem Hüllkreis 23, dessen Durchmesser zwischen dem Innendurchmesser **d1** des Meßbechers 2 und dem Innendurchmesser **d4** der Ringwand 37 liegt. Aus der Tatsache, daß der Kreis 34 einen um etwa 6 mm bis 7 mm kleineren Durchmesser **d7** hat als die zylindrische Innenfläche 20' mit Innendurchmesser **d1** und durch die Konvergenz der Leitflächen 35 und 36 der einzelnen Einströmkanäle 30 bis 32' der beiden Gruppen E1 und E2 ergibt sich in den einzelnen Einströmkanälen eine resultierende Strömung, die in der Nähe der achsparallelen Flügelaußenkanten auf die Flügel 22 trifft.

Dabei ist der Durchmesser **d7** des Kreises 34 zumindest annähernd um das Maß kleiner ist als der Hüllkreis 23 der radialen Enden der Flügel 22 des Flügelrades (5), um welches der Hüllkreis 23 seinerseits kleiner ist als der Innendurchmesser **d1** der Innenfläche 20' des Meßbechers 2.

Aus Fig. 1 ist erkennbar, daß die Flügel 22 des Flügelrades 5 unterseitig von der Radialebene der unteren Randkanten 37 der Einströmkanäle 30 bis 32' einen axialen Abstand **a2** von weniger als 4 mm aufweisen und daß die Flügel 22 des Flügelrades 5 oberseitig in der Radialebene 54 der unteren Begrenzungsflächen 53 der Auslaßkanäle 50 enden; d.h. die oberen Endkanten der radial verlaufenden Flügel 22 liegen in der Radialebene 54. Es ist aber auch möglich, die Flügel 22 des Flügelrades 5 so zu gestalten, daß sie diese Radialebene 54 nach oben um ein Maß überschreiten, das höchstens einem Viertel bis einem Drittel der Höhe **h3** der Auslaßkanäle 50 entspricht.

Von dieser Radialebene 54 hat die untere Lagerplatine 19 des Zählwerks 4 einen axialen Abstand **a1**, der so groß ist, daß diese Lagerplatine 19 auf die die Drehzahl des Flügelrades 5 bestimmenden Stömungsverhältnisse innerhalb des Meßbechers 2 keinen nachteiligen Einfluß mehr hat. In jedem Fall sollte dieser Abstand bei der hier gegebenen Größe wenigstens 8 mm betragen. Im gezeichneten Ausführungsbeispiel, das einer erprobten Ausführungsform entspricht, beträgt dieser Abstand **a1** etwa 20 mm, so daß die drehenden Räder des Räderwerks 4, das ja vollständig umflutet ist, keinen Einfluß auf daß Meßergebnis nehmen können.

Durch diese im Ausführungsbeispiel vorgesehene Gestaltung des Flügelrades 5 wird der Meßraum in seiner Wirksamkeit nahezu auf den unterhalb der Auslaßkanäle liegenden Axialbereich reduziert, in dem sich der Strömungseinfluß der Staurippen 43 des Becherbodens 7 noch auswirkt. Es wird somit erreicht, daß die Staurippen 43 am Becherboden 7 noch ausreichen, die Strömung in der Meßkammer so zu beeinflussen, daß ein durchflußproportionales Meßergebnis gewährleistet wird.

Wie aus den Fig. 5, 7 und 8 ersichtlich ist, besitzt jeweils der mittlere Einströmkanal 31 bzw. 31' der beiden sich diametral gegenüberliegenden Gruppen E1 und E2 von Einströmkanälen 31 bis 32' einen verkleinerten Einlaßquerschnitt. Zu diesem Zweck sind diese beiden Einlaßkanäle 31 und 31' jeweils am oberen Rand mit einer Verengungsrippe 24 versehen, durch welche die Höhe **h** des normalen Einlaßquerschnitts der übrigen Einströmkanäle 30, 32 bzw. 30' und 32' von etwa 7 mm bis 8 mm auf etwa 5 mm verringert wird. Dabei ist die radiale Dicke **d6** dieser Verengungsrippe 24 kleiner als die Hälfte der mittleren Länge **s** des Einströmkanals 31, 31'; die Dicke **d6** beträgt etwa 1 mm bis 2 mm, **s** beträgt etwa 8 mm bis 10 mm.

Diese Verengungsrippe 24 verläuft bündig mit der zylindrischen Innenfläche 20' des unteren Teils 20 der Becherwand, und sie erstreckt sich jeweils von der einen Leitfläche 35 des Einströmkanals 31 bzw. 31' zur gegenüberliegenden Leitfläche 36. (Fig. 5, 7 und 8)

Diese Verengungsrippen 24 in den beiden mittleren Einströmkanälen 31 und 31' erzeugen Strömungsverhältnisse, durch welche bei kleinen Volumenströmen ein zu frühes Abfallen der Meßkurve und somit das Entstehen zu großer negativer Meßfehler verhindert wird. Der Einlaßquerschnitt der Einströmkanäle 31 und 31' wird durch diese Verengungsrippen um etwa 3/5 reduziert, so daß die Strömungsgeschwindigkeit in diesen beiden Einströmkanälen 31 und 31' höher ist als in den beidseitig benachbarten Einströmkanälen 30 und 30' bzw. 32 und 32'.

Vorteilhaft ist dabei auch, daß diese Verengungsrippen 24 sowohl innenseitig als auch außenseitig scharfkantig ausgebildet sind.

Die Ringwand 38 umschließt eine zylindrische Ausnehmung 42 des Becherbodens 7 deren Tiefe **t** etwa 4 mm bis 5 mm beträgt (Fig. 1 und 6a). Diese Ausnehmung 42 ist mit insgesamt sechs in gleichen Winkelabständen angeordneten Staurippen 43 versehen, die einen etwa quadratischen Querschnitt aufweisen, deren Breite **b** (Fig. 6b) etwa 3 mm bis 4 mm beträgt und deren Höhe **h2** etwa um etwa 0,5 bis 1,5 mm kleiner ist als die Tiefe **t**.
Wie aus den Fig. 6, 10 und 11 ersichtlich ist, stoßen die Staurippen 43 im Zentrum unmittelbar aufeinander.

Da das Flügelrad 5 mit sieben Flügeln 22 ausgestattet ist, der Becherboden 7 aber nur sechs Staurippen 43 aufweist, ergibt sich zwischen den Flügeln 22 einerseits und den Staurippen 43 andererseits eine ungleiche Teilung, die eine gleichförmige Rotation des Flügelrades 5 bewirkt und sich somit positiv auf das Meßergebnis und die Reproduzierbarkeit auswirkt.

Axial oberhalb des unteren Teils 20 der Meßbecherwand befindet sich ein mittlerer Gehäuseabschnitt 26 (Fig. 1 und 4), dessen Außendurchmesser **D2** etwa 66 mm beträgt und somit größer ist als der Außendurchmesser **D1** des unteren Teils 20 des Meßbechers 2. Der Innendurchmesser dieses Gehäuseabschnitts 26 ist - abgesehen von der formtechnisch bedingten Konizität - aber gleich groß wie der Innendurchmesser **d1** des unteren Teils des Meßbechers 2, so daß die Gehäusewand in diesem Gehäuseabschnitt 26 eine größere Dicke **d9** (Fig. 6a) aufweist als der untere Teil 20 des Meßbecher 2. In diesem Gehäuseabschnitt 26 befinden sich vier jeweils um 90° zueinander versetzt angeordnete Auslaßkanäle 50, die untereinander gleich groß sind, d.h. gleiche Durchlaßquerschnitte aufweisen. Diese vier Auslaßkanäle 50 besitzen jeweils achsparallele Leitflächen 51 und 52. In axialer Richtung werden sie nur von unteren, in einer gemeinsamen Radialebene 54 liegenden Begrenzungsflächen 53 begrenzt. Oberseitig sind die Auslaßkanäle 50 innerhalb eines geschlossenen Gehäuserands 55 des oberen Gehäuseteils 3 offen.
Wie aus den Fig. 3 und 11 ersichtlich ist, bilden die in β1 lebenen 56 tangieren einen konzentrischen Kreis 57, dessen Durchmesser **d5** etwa drei Vierteln des Innendurchmessers **d4** der Ringwand 38 bzw. des Meßbechers 2 entspricht.

Den Fig. 1, 3 und 6a ist entnehmbar, daß der Zählwerksteil 3 des Kunststoffgehäuses 1 einen wesentlich größeren Innendurchmesser **d2** aufweist als der Meßbecher 2. Der Innendurchmesser **d2** ist etwa um den Faktor 1,2 bis 1,5 größer als **d1**. Dabei ist der Übergang 58 vom kleineren Innendurchmesser **d1** des Meßbechers 2 zum Zählwerksteil 3 mit dem größeren Innendurchmesser **d2** einstufig ausgebildet und in einer Radialebene 59 angeordnet, die im Axialbereich der oberen Endkanten 60 der Leitflächen 51, 52 der Auslaßkanäle 50 liegt (Fig. 6a). Die in Umfangsrichtung jeweils zwischen zwei Auslaßkanälen 50 liegenden Wandabschnitte 61 sind oberseitig planeben und als dünnwandige, oben offene Hohlkörper ausgebildet. Die Radialebene 59, in der die oberen Endkanten 60 der achsparallelen Leitflächen 51, 52 der Auslaßkanäle 50 liegen, hat von der Radialebene 54, in der die unteren Endflächen 53 der Auslaßkanäle 50 liegen, einen axialen Abstand **a3** (Fig. 1), der um etwa 2 bis 4 mm größer ist als die Höhe **h3** eines Auslaßkanals 50, die von dem umlaufenden, erweiterten Gehäuserand 55, der die oberen Randkanten der Auslaßkanäle 50 bildet, bestimmt ist.

Weil der Außendurchmesser **D2** des oberen Becherteils 26 um weniger als die Wanddicke **d3** (Fig. 3) des Zählwerkteils 3 kleiner ist als der Außendurchmesser **D3** des Zählwerkteils 3 des Kunststoffgehäuses 1, ist die Gehäusewand 49 des Zählwerkteils 3 jeweils im Bereich der Auslaßöffnung eines Auslaßkanals 50 mit einer auf den Außendurchmesser **D2** abgestimmten Axialnut 64 versehen. Die Breite **b** der Axialnut 64 stimmt mit der Breite der Auslaßöffnung überein. Die radiale Tiefe **t2** diese Axialnuten 64 ist auf den Außendurchmesser **D2** des Gehäuseabschnitts 26 abgestimmt und entspricht etwa zwei Dritteln der Differenz zwischen D3 und D2. Diese Axialnuten 64 sind formtechnisch bedingt.

Auch die axial verlaufenden Nuten 70 und Hohlräume 71 im unteren Teil 20 der Becherwandung, die am besten in den Fig. 4, 5, 6 und 10 zu sehen sind, dienen hauptsächlich der Schaffung geringer Wanddicken, die spritztechnisch bevorzugt werden. Außerdem bewirken die Nuten 70 eine höhere Verwirbelung der Umströmung des Meßbechers 2.

Wie am besten aus der schematische Darstellung der Fig. 13 zu erkennen ist, liegen die jeweils mittleren, mit einer Verengungsrippe 24 versehenen Einströmkanäle 31 (31') in Umfangsrichtung jeweils unmittelbar unterhalb eines Auslaßkanals 50. Die Mittelebene 33 des Einströmkanals 31 bildet mit der Mittelebene 56 des Auslaßkanals 50 einen Winkel γ von etwa 80° bis 85°.

## Patentansprüche

1. Meßeinheit mit Kunststoffgehäuse für ein Wassermeßgerät, bei dem das Kunststoffgehäuse einen unteren, im wesentlichen zylindrischen Meßbecher aufweist, in dem ein Flügelrad koaxial drehbar gelagert ist und in dessen zylindrischer Wand wenigstens zwei sich diametral gegenüberliegende Einströmkanäle mit achsparallelen Leitflächen angeordnet sind, deren Strömungsrichtung auf die Flügel des rotierenden Flügelrades gerichtet ist, wobei der Meßbecher einen planebenen Becherboden aufweist, der auf seiner Innenseite mit mehreren radialen Staurippen versehen ist, und mit axial oberhalb der Einströmkanäle angeordneten Auslaßkanälen mit achsparallelen Leitflächen, die zu den Einströmkanälen jeweils entgegengesetzt schräg verlaufen, sowie mit einem axial oberhalb der Auslaßkanäle liegenden Zählwerkteil zur Aufnahme eines vom Flügelrad angetriebenen Zählwerks, das eine den Gehäusedeckel bildende, obere Abschlußplatine und eine mit dieser verbundene, untere Lagerplatine aufweist,
**dadurch gekennzeichnet,**
**daß** das Kunststoffgehäuse (1) einstückig ohne Zwischenwand zwischen dem Meßbecher (2) und dem Zählwerkteil (3) ausgebildet ist,
und **daß** die Flügel (22) des Flügelrades (5) unterseitig von der Radialebene der unteren Randkanten (37) der Einströmkanäle (30, 31, 32; 30', 31', 32') einen axialen Abstand (a2) von weniger als 4 mm aufweisen und oberseitig in der Radialebene (54) der unteren Begrenzungsflächen (53) der Auslaßkanäle (50) enden oder diese Radialebene (54) nach oben höchstens um ein Maß überschreiten, das einem Viertel bis einem Drittel der axialen Höhe (h3) einer Auslaßöffnung eines Auslaßkanals (50) entspricht.

2. Meßeinheit nach Anspruch 1, **dadurch gekennzeichnet, daß** die Summe der Auslaßquerschnitte wenigstens um ein Drittel größer ist als die Summe der Einlaßquerschnitte, und daß bei vier um jeweils 90° zueinander versetzten Auslaßkanälen (50) zwei sich diametral gegenüberliegende Gruppen (E1, E2) von wenigstens je drei um etwa 30° bis 40° zueinander versetzten Einströmkanälen in der Meßbecherwand (20) angeordnet sind.

3. Meßeinheit nach Anspruch 2, **dadurch gekennzeichnet, daß** die jeweils mittleren Einströmkanäle (31, 31') der beiden Gruppen (E1, E2) von Einströmkanälen (30 bis 32') in Umfangsrichtung unmittelbar unterhalb eines Auslaßkanals (50) angeordnet sind.

4. Meßeinheit nach Anspruch 2 oder 3, **dadurch gekennzeichnet, daß** jeweils wenigstens ein Einströmkanal (31, 31') jeder der beiden Gruppen (E1, E2) einen verkleinerten Einlaßquerschnitt aufweist.

5. Meßeinheit nach Anspruch 4, **dadurch gekennzeichnet, daß** die Einlaßkanäle (31, 31') mit dem verkleinerten Einlaßquerschnitt jeweils am oberen Rand mit einer Verengungsrippe (24) versehen sind, die mit der Innenfläche (20') des Flügelradbechers (2) glatt bündig verläuft und deren radiale Dicke (d6) kleiner ist als die Hälfte der mittleren Länge (s) des Einströmkanals (31, 31').

6. Meßeinheit nach Anspruch 4 oder 5, **dadurch gekennzeichnet, daß** die Verengungsrippen (24) scharfkantig sind.

7. Meßeinheit nach einem der Ansprüche 4 bis 6, **dadurch gekennzeichnet, daß** die Einströmkanäle (31, 31') mit den Verengungsrippen (24) jeweils zwischen zwei Einströmkanälen (30 und 32 bzw. 30' und 32') ohne Verengungsrippen liegen.

8. Meßeinheit nach einem der Ansprüche 1 bis 7, **dadurch gekennzeichnet, daß** der Becherboden (7) mindestens eine Staurippe (43) weniger aufweist, als das Flügelrad (5) Flügel (22) hat.

9. Meßeinheit nach einem der Ansprüche 1 bis 8, **dadurch gekennzeichnet, daß** die Auslaßkanäle (50) innerhalb der geschlossenen Gehäusewand (49) oberseitig offen sind.

10. Meßeinheit nach einem der Ansprüche 1 bis 9, **dadurch gekennzeichnet, daß** der Innendurchmesser (d2) des Zählwerkteils (3) des Kunststoffgehäuses (1) wenigstens um den Faktor 1,2, vorzugsweise um den Faktor 1,5, größer ist als der Innendurchmesser (d1) des die Einströmkanäle (30 bis 32') und die Auslaßkanäle (50) umfassenden Abschnitts (2) des Kunststoffgehäuses (1).

11. Meßeinheit nach Anspruch 10, **dadurch gekennzeichnet, daß** der Übergang vom Abschnitt (2) mit dem kleineren Innendurchmesser (d1) zum Zählwerkteil (3) mit dem größeren Innendurchmesser (d2) einstufig ausgebildet und in einer Radialebene (59) angeordnet ist, die im Axialbereich der oberen Endkanten (60) der Auslaßkanäle (50) liegt.

12. Meßeinheit nach einem der Ansprüche 9 bis 11, **dadurch gekennzeichnet, daß** die in Umfangsrichtung jeweils zwischen zwei Auslaßkanälen (50) liegenden Wandabschnitte (61) oberseitig planeben und als dünnwandige, oberseitig offene Hohlkörper ausgebildet sind.

13. Meßeinheit nach einem der Ansprüche 9 bis 12, **dadurch gekennzeichnet, daß** die oberen Endkanten (60) der achsparallelen Leitflächen (51, 52) der Auslaßkanäle (50) in einer Axialialebene (59) liegen, die von den unteren Endflächen (53) der Auslaßkanäle (50) einen um wenigstens 2 mm größeren axialen Abstand (a3) aufweist als ein umlaufender, erweiterter Gehäuserand (55), der die oberen Randkanten der Auslaßöffnungen der Auslaßkanäle (50) bildet.

14. Meßeinheit nach einem der Ansprüche 8 bis 12, **dadurch gekennzeichnet, daß** die im wesentlichen zylindrische Innenfläche des Zählwerkteils (3) des Kunststoffgehäuses (1) jeweils im Bereich der Auslaßöffnung eines Auslaßkanals (50) mit einer Axialnut (64) versehen ist, deren Breite (b) etwa der Breite der Auslaßöffnung entspricht und deren radiale Tiefe (t2)auf den Außendurchmesser (D2) des die Auslaßkanäle (50) enthaltenden Abschnitts (26) des Kunststoffgehäuses (1) abgestimmt ist.

15. Meßeinheit nach einem der Ansprüche 1 bis 14, **dadurch gekennzeichnet, daß** die achsparallelen Leitflächen (35, 36) der Einströmkanäle (30 bis 31') jeweils einen spitzen Winkel (β) von etwa 5° bis 8° miteinander bilden und bei einer Wanddicke (d9) von etwa 5 mm eine mittlere Länge (s) von etwa 7 mm bis 10 mm aufweisen.

16. Meßeinheit nach Anspruch 15, **dadurch gekennzeichnet, daß** die mit den Winkelhalbierenden der Keilwinkel (β) zusammen fallenden, achsparallelen Strömungsmittelebenen (33) der Einströmkanäle (30 bis 32') jeweils tangential zu einem gemeinsamen, konzentrischen Kreis (34) verlaufen, dessen Durchmesser (d7) zumindest annähernd um das Maß kleiner ist als der Hüllkreis (23) der radialen Enden der Flügel (22) des Flügelrades (5), um welches der Hüllkreis (23) kleiner ist als der Innendurchmesser (d1) der Innenfläche (20') des Meßbechers (2).

17. Meßeinheit nach Anspruch 15 oder 16, **dadurch gekennzeichnet, daß** die achsparallelen Leitflächen (51, 52) einen in Strömungsrichtung divergierenden Keilwinkel (β1) von etwa 7° bis 9° bilden.

18. Meßeinheit nach einem der Ansprüche 15 bis 17, **dadurch gekennzeichnet, daß** die achsparallelen Mittelebenen (56) der Auslaßkanäle (50) einen konzentrischen Kreis (57) tangieren, dessen Durchmesser (d5) etwa drei Vierteln des Innendurchmessers (d4) der Ringwand (38) des Meßbechers (2) entspricht.

19. Meßeinheit nach Anspruch 1 oder 8, **dadurch gekennzeichnet, daß** der Becherboden (7) insgesamt sechs um 60° zueinander versetzte, radiale Staurippen (43) aufweist, die jeweils einen zumindest annähernd quadratischen Querschnitt mit einer axialen Höhe (h2) von etwa 3 mm bis 4 mm aufweisen, die im Zentrum unmittelbar aufeinander stoßen und die in einer zylindrischen Ausnehmung (42) des Becherbodens (7) angeordnet sind, deren axiale Tiefe (t) um etwa 0,5 mm bis 1,5 mm größer ist als axiale Höhe (h2) der Staurippen.

20. Meßeinheit nach Anspruch 19, **dadurch gekennzeichnet, daß** die unteren Begrenzungskanten der Einlaßöffnungen der einzelnen Einströmkanäle (30 bis 32') von der oberen Randkante (37) der die Ausnehmung (42) des Becherbodens (7) umschließenden Ringwand (48) gebildet sind.

21. Meßeinheit nach Anspruch 20, **dadurch gekennzeichnet, daß** die jeweils im Bereich eines Einströmkanals (30 bis 32') liegenden, äußeren Wandflächenabschnitte (38') der Ringwand (38) zumindest annähernd fluchtend mit der Innenfläche (20') der Meßbecherwand (20) verlaufen und daß die Einströmkanäle (30 bis 32') außerhalb der Ringwand (38) an der Becherbodenunterseite (41) offen enden.

## Claims

1. Meter with a plastics material housing for a water meter, in which the plastics material housing has a lower substantially cylindrical measurement beaker, in which an impeller is coaxially rotatably mounted and in the cylindrical wall of which at least two diametrically opposing inflow channels with axially parallel guide faces are arranged, the flow direction of which is directed at the vanes of the rotating impeller, wherein the measurement beaker has a level beaker base, which is provided on its inner side with a plurality of radial retaining ribs, and with outlet channels arranged axially above the inflow channels, having axially parallel guide faces, which extend obliquely in an opposing manner in each case to the inflow channels, as well as with a counter part located axially above the outlet channels to receive a counter driven by the impeller, which counter has an upper closing plate forming the housing lid and a lower bearing plate connected thereto, **characterised in that** the plastics material housing (1) is configured in one piece without a partition between the measurement beaker (2) and the counter part (3), and **in that** the vanes (22) of the impeller (5) have an axial spacing (a2) of less than 4 mm at the bottom from the radial plane of the lower edges (37) of the inflow channels (30, 31, 32; 30', 31', 32') and end at the top in the radial plane (54) of the lower limiting faces (53) of the outlet channels (50) or upwardly pass over this radial plane (54) at most by a measure which corresponds to a quarter to a third of the axial height (h3) of an outlet opening of an outlet channel (50).

2. Meter according to claim 1, **characterised in that** the total of the outlet cross sections is greater at least by a third than the total of the inlet cross sections, and **in that** in the case of four outlet channels (50) offset with respect to one another by 90° in each case, two diametrically opposing groups (E1, E2) of at least three inflow channels in each case offset with respect one another by about 30° to 40° are arranged in the measurement beaker wall (20).

3. Meter according to claim 2, **characterised in that** the respective central inflow channels (31, 31') of the two groups (E1, E2) of inflow channels (30 to 32') in the peripheral direction are arranged directly below an outlet channel (50).

4. Meter according to claim 2 or 3, **characterised in that** at least one inflow channel (31, 31') in each case of each of the two groups (E1, E2) has a reduced inlet cross section.

5. Meter according to claim 4, **characterised in that** the inlet channels (31, 31') with the reduced inlet cross section are in each case provided at the upper edge with a restriction rib (24), which extends smoothly flush with the inner face (20') of the impeller beaker (2) and the radial thickness (d6) thereof is smaller than half the mean length (s) of the inflow channel (31, 31').

6. Meter according to claim 4 or 5, **characterised in that** the restriction ribs (24) are sharp-edged.

7. Meter according to any one of claims 4 to 6, **characterised in that** the inflow channels (31, 31') with the restriction ribs (24) in each case lie between two inflow channels (30 and 32 or 30' and 32') without restriction ribs.

8. Meter according to any one of claims 1 to 7, **characterised in that** the beaker base (7) has at least one retaining rib (43) less than the impeller (5) has vanes (22).

9. Meter according to any one of claims 1 to 8, **characterised in that** the outlet channels (50) inside the closed housing wall (49) are open at the top.

10. Meter according to any one of claims 1 to 9, **characterised in that** the internal diameter (d2) of the counter part (3) of the plastics material housing (1) is greater by at least the factor 1.2, preferably by the factor 1.5 than the internal diameter (d1) of the portion (2) of the plastics material housing (1) comprising the inflow channels (30 to 32') and the outlet channels (50).

11. Meter according to claim 10, **characterised in that** the transition from the portion (2) with the smaller internal diameter (d1) to the counter part (3) with the larger internal diameter (d2) is configured in one step and is arranged in a radial plane (59), which lies in the axial region of the upper end edges (60) of the outlet channels (50).

12. Meter according to any one of claims 9 to 11, **characterised in that** the wall portions (61) located in the peripheral direction in each case between two outlet channels (50) are configured so as to be level at the top and as thin-walled hollow bodies which are open at the top.

13. Meter according to any one of claims 9 to 12, **characterised in that** the upper end edges (60) of the axially parallel guide faces (51, 52) of the outlet channels (50) lie in an axial plane (59), which has an axial spacing (a3) from the lower end faces (53) of the outlet channels (50) which is greater by at least 2 mm than a peripheral, widened housing edge (55), which forms the upper edges of the outlet openings of the outlet channels (50).

14. Meter according to any one of claims 8 to 12, **characterised in that** the substantially cylindrical inner face of the counter part (3) of the plastics material housing (1) is provided in each case in the region of the outlet opening of an outlet channel (50) with an axial groove (64), the width (b) of which approximately corresponds to the width of the outlet opening and the radial depth (t2) of which is matched to the external diameter (D2) of the portion (26) of the plastics material housing (1) containing the outlet channels (50).

15. Meter according to any one of claims 1 to 14, **characterised in that** the axially parallel guide faces (35, 36) of the inflow channels (30 to 31'), in each case form an acute angle (β) of about 5° to 8° with one another and with a wall thickness (d9) of about 5 mm and have a mean length (s) of about 7 mm to 10 mm.

16. Meter according to claim 15, **characterised in that** the axially parallel flow central planes (33) of the inflow channels (30 to 32') coinciding with the angle bisectors of the wedge angles (β) in each case extend tangentially to a common, concentric circle (34), the diameter (d7) of which is at least approximately smaller than the envelope circle (23) of the radial ends of the vanes (22) of the impeller (5) by the extent by which the envelope circle (23) is smaller than the internal diameter (d1) of the inner face (20') of the measurement beaker (2).

17. Meter according to claim 15 or 16, **characterised in that** the axially parallel guide faces (51, 52) form a wedge angle (β1) of about 7° to 9° diverging in the flow direction.

18. Meter according to any one of claims 15 to 17, **characterised in that** the axially parallel centre planes (56) of the outlet channels (50) are tangent to a concentric circle (57), the diameter (d5) of which approximately corresponds to three quarters of the internal diameter (d4) of the annular wall (38) of the measurement beaker (2).

19. Meter according to claim 1 or 8, **characterised in that** the beaker base (7) has a total of six radial retaining ribs (43) which are offset with respect to one another by 60°, which in each case have an at least virtually square cross section with an axial height (h2) of about 3 mm to 4 mm, which meet one another directly in the centre and which are arranged in a cylindrical recess (42) of the beaker base (7), the axial depth (t) of which is greater by about 0.5 mm to 1.5 mm than the axial height (h2) of the retaining ribs.

20. Meter according to claim 19, **characterised in that** the lower limiting edges of the inlet openings of the individual inflow channels (30 to 32') are formed by the upper edge (37) of the annular wall (48) surrounding the recess (42) of the beaker base (7).

21. Meter according to claim 20, **characterised in that** the outer wall face portions (38') of the annular wall (38) located in each case in the region of an inflow channel (30 to 32') extend at least virtually flush with the inner face (20') of the measurement beaker wall (20) and **in that** the inflow channels (30 to 32') end open outside the annular wall (38) on the lower side (41) of the beaker base.

## Revendications

1. Unité de mesure avec un boîtier en plastique pour un compteur d'eau, dans lequel le boîtier en plastique présente un godet de mesure inférieur essentiellement cylindrique, dans lequel une roue à pales est montée à rotation coaxiale et dans la paroi cylindrique duquel sont disposés aux moins deux canaux de flux entrant diamétralement opposés ayant des faces directrices parallèles à l'axe, dont la direction d'écoulement est dirigée vers les pales de la roue à pales rotative, sachant que le godet de mesure présente un fond de godet plan qui est pourvu sur son côté intérieur de plusieurs nervures de retenue radiales, et avec des canaux de sortie disposés axialement au-dessus des canaux de flux entrant et ayant des faces directrices parallèles à l'axe, qui s'étendent respectivement en oblique en direction opposée des canaux de flux entrant, ainsi qu'avec une partie de compteur disposée axialement au-dessus des canaux de sortie et destinée à recevoir un compteur entraîné par la roue à pales, compteur qui présente une plaque de fermeture supérieure constituant le couvercle du boîtier et une plaque de support inférieure assemblée à la plaque supérieure,
**caractérisée en ce que** le boîtier en plastique (1) est réalisé d'un seul tenant sans paroi intermédiaire entre le godet de mesure (2) et la partie de compteur (3),
et **en ce que** les pales (22) de la roue à pales (5) présentent sur le dessous une distance axiale (a2) inférieure à 4 mm par rapport au plan radial des arêtes de bord inférieures (37) des canaux de flux entrant (30, 31, 32 ; 30', 31', 32') et se terminent sur le dessus dans le plan radial (54) des faces de délimitation inférieures (53) des canaux de sortie (50) ou dépassent de ce plan radial (54) vers le haut au plus d'une mesure correspondant à un quart à un tiers de la hauteur axiale (h3) d'une ouverture de sortie d'un canal de sortie (50).

2. Unité de mesure selon la revendication 1, **caractérisée en ce que** la somme des sections de sortie est supérieure d'au moins un tiers à la somme des sections d'entrée, et **en ce que**, en présence de quatre canaux de sortie (50) respectivement décalés de 90° les uns par rapport aux autres, deux groupes diamétralement opposés (E1, E2) comprenant chacun au moins trois canaux de flux entrant mutuellement décalés d'environ 30° à 40° sont disposés dans la paroi (20) du godet de mesure.

3. Unité de mesure selon la revendication 2, **caractérisée en ce que** les canaux de flux entrant centraux respectifs (31, 31') des deux groupes (E1, E2) de canaux de flux entrant (30 à 32') sont disposés, en direction circonférentielle, juste en dessous d'un canal de sortie (50).

4. Unité de mesure selon la revendication 2 ou 3, **caractérisée en ce qu'**au moins un canal de flux entrant respectif (31, 31') de chacun des deux groupes (E1, E2) présente une section d'entrée réduite.

5. Unité de mesure selon la revendication 4, **caractérisée en ce que** les canaux de flux entrant (31, 31') ayant la section d'entrée réduite sont respectivement pourvus sur le bord supérieur d'une nervure de rétrécissement (24) qui s'étend à fleur de la face intérieure (21') du godet (2) de roue à pales et dont l'épaisseur radiale (d6) est inférieure à la moitié de la longueur moyenne (s) du canal de flux entrant (31, 31').

6. Unité de mesure selon la revendication 4 ou 5, **caractérisée en ce que** les nervures de rétrécissement (24) sont à arêtes vives.

7. Unité de mesure selon l'une des revendications 4 à 6, **caractérisée en ce que** les canaux de flux entrant (31, 31') pourvus des nervures de rétrécissement (24) se trouvent respectivement entre deux canaux de flux entrant (30 et 32 ou respectivement 30' et 32') et dépourvus de nervures de rétrécissement.

8. Unité de mesure selon l'une des revendications 1 à 7, **caractérisée en ce que** le fond de godet (7) présente au moins une nervure de retenue (43) de moins que la roue à pales (5) ne possède de pales (22).

9. Unité de mesure selon l'une des revendications 1 à 8, **caractérisée en ce que** les canaux de sortie (50) à l'intérieur de la paroi de boîtier fermée (49) sont ouverts sur le dessus.

10. Unité de mesure selon l'une des revendications 1 à 9, **caractérisée en ce que** le diamètre intérieur (d2) de la partie de compteur (3) du boîtier en plastique (1) est supérieur au moins du facteur 1,2, de préférence du facteur 1,5, au diamètre intérieur (d1) de la partie (2) du boîtier en plastique (1) comprenant les canaux de flux entrant (30 à 32') et les canaux de sortie (50).

11. Unité de mesure selon la revendication 10, **caractérisée en ce que** la transition de la partie (2) de plus petit diamètre intérieur (d1) à la partie de compteur (3) de plus grand diamètre intérieur (d2) est réalisée à un gradin et est disposée dans un plan radial (59) qui se situe dans la région axiale des arêtes terminales supérieures (60) des canaux de sortie (50).

12. Unité de mesure selon l'une des revendications 9 à 11, **caractérisée en ce que** les parties de paroi (61) respectivement situées en direction circonférentielle entre deux canaux de sortie (50) sont réalisées planes sur le dessus et sous la forme de corps creux à paroi mince ouverts sur le dessus.

13. Unité de mesure selon l'une des revendications 9 à 12, **caractérisée en ce que** les arêtes terminales supérieures (60) des faces directrices (51, 52) parallèles à l'axe des canaux de sortie (50) se situent dans un plan axial (59) qui présente, par rapport aux faces terminales inférieures (53) des canaux de sortie (50), une distance axiale (a3) supérieure d'au moins 2 mm à celle d'un bord de boîtier élargi périphérique (55) qui forme les arêtes de bord supérieures des ouvertures de sortie des canaux de sortie (50).

14. Unité de mesure selon l'une des revendications 8 à 12, **caractérisée en ce que** la face intérieure essentiellement cylindrique de la partie de compteur (3) du boîtier en plastique (1) est chaque fois pourvue, dans la région de l'ouverture de sortie d'un canal de sortie (50), d'une rainure axiale (64) dont la largeur (b) correspond environ à la largeur de l'ouverture de sortie et dont la profondeur radiale (t2) est adaptée au diamètre extérieur (D2) de la partie ou section (26) du boîtier en plastique (1) qui contient les canaux de sortie (50).

15. Unité de mesure selon l'une des revendications 1 à 14, **caractérisée en ce que** les faces directrices (35, 36) parallèles à l'axe des canaux de flux entrant (30 à 31') forment respectivement entre elles un angle aigu (β) d'environ 5° à 8° et présentent, pour une épaisseur de paroi (d9) d'environ 5 mm, une longueur moyenne (s) d'environ 7 mm à 10 mm.

16. Unité de mesure selon la revendication 15, **caractérisée en ce que** les plans médians d'écoulement (33) parallèles à l'axe des canaux de flux entrant (30 à 32'), qui coïncident avec les bissectrices des angles au sommet (β), s'étendent respectivement tangentiellement à un cercle concentrique commun (34), dont le diamètre (d7) est inférieur au cercle enveloppant (23) des extrémités radiales des pales (22) de la roue à pales (5) au moins approximativement de la mesure dans laquelle le cercle enveloppant (23) est inférieur au diamètre intérieur (d1) de la face intérieure (20') du godet de mesure (2).

17. Unité de mesure selon la revendication 15 ou 16, **caractérisée en ce que** les faces directrices (51, 52) parallèles à l'axe forment un angle au sommet (β1) divergeant dans la direction d'écoulement d'environ 7° à 9°.

18. Unité de mesure selon l'une des revendications 15 à 17, **caractérisée en ce que** les plans médians (56) parallèles à l'axe des canaux de sortie (50) sont tangents à un cercle concentrique (57) dont le diamètre (d5) correspond environ aux trois-quarts du diamètre intérieur (d4) de la paroi annulaire (38) du godet de mesure (2).

19. Unité de mesure selon la revendication 1 ou 8, **caractérisée en ce que** le fond (7) du godet présente un total de six nervures de retenue radiales (43) mutuellement décalées de 60°, qui présentent respectivement une section au moins approximativement carrée avec une hauteur axiale (h2) d'environ 3 mm à 4 mm, qui se rencontrent directement au centre et qui sont disposées dans un évidement cylindrique (42) du fond (7) du godet dont la profondeur axiale (t) est supérieure d'environ 0,5 mm à 1,5 mm à la hauteur axiale (h2) des nervures de retenue.

20. Unité de mesure selon la revendication 19, **caractérisée en ce que** les arêtes de délimitation inférieures des ouvertures d'entrée des canaux de flux entrant individuels (30 à 32') sont formées par l'arête de bord supérieure (37) de la paroi annulaire (48) entourant l'évidement (42) du fond (7) du godet.

21. Unité de mesure selon la revendication 20, **caractérisée en ce que** les parties de surface de paroi extérieures (38') de la paroi annulaire (38), respectivement situées dans la région d'un canal de flux entrant (30 à 32'), s'étendent au moins approximativement en alignement avec la face intérieure (20') de la paroi (20) du godet de mesure, et **en ce que** les canaux de flux entrant (30 à 32') se terminent ouverts sur la face inférieure (41) du fond du godet, en dehors de la paroi annulaire (38).
